Europäisches Patentamt

(19) **European Patent Office**

**Office européen des brevets**

(11) Numéro de publication: **0 071 491**

**B1**

(12) **FASCICULE DE BREVET EUROPÉEN**

(45) Date de publication du fascicule du brevet:
15.01.86

(51) Int. Cl.⁴: **G 01 N 30/91**

(21) Numéro de dépôt: **82401117.5**

(22) Date de dépôt: **18.06.82**

(54) **Procédé de prélèvement et d'analyse par chromatographie sur plaque et dispositifs permettant sa mise en oeuvre.**

(30) Priorité: **30.07.81 FR 8114816**

(43) Date de publication de la demande:
**09.02.83 Bulletin 83/6**

(45) Mention de la délivrance du brevet:
**15.01.86 Bulletin 86/3**

(84) Etats contractants désignés:
**AT BE CH DE GB IT LI NL**

(56) Documents cité:
**FR-A-1 560 981**
**FR-A-2 156 753**
**US-A-3 266 554**
**US-A-3 368 783**
**US-A-3 855 846**
**US-A-3 915 856**

(73) Titulaire: **L'OREAL, 14, Rue Royale, F-75008 Paris (FR)**

(72) Inventeur: **Saint-Leger, Didier, 2, rue de la Petite Truanderie, F-75001 Paris (FR)**
Inventeur: **Abrioux, André, 7, rue Ed. Gillette, F-93700 Drancy (FR)**

(74) Mandataire: **Peuscet, Jacques, 3, Square de Maubeuge, F-75009 Paris (FR)**

## Description

La présente invention concerne un procédé de prélèvement et d'analyse par chromatographie sur plaque ou sur couche mince d'au moins un mélange de substances, consistant à déposer une quantité appropriée du mélange à analyser sur la plaque de chromatographie, à mettre en contact la plaque de chromatographie avec un solvant ou un mélange de solvants de façon à provoquer la migration du mélange sur la plaque et la séparation des constituants dudit mélange, et à révéler ladite plaque par des moyens, par exemple chimiques ou physico-chimiques, pour l'analyse qualitative et/ou quantitative des constituants du mélange.

La méthode visée ci-dessus est bien connue et largement utilisée en laboratoire. La chromatographie sur plaque ou sur couche mince fait généralement appel à une plaque de verre sur laquelle est déposée une mince couche de 100 à 300 microns d'épaisseur, d'une substance absorbante telle que de la silice par exemple. Sur une telle plaque de chromatographie, on dépose une goutte du mélange à examiner; on laisse ensuite sécher; puis la plaque de chromatographie est placée, par exemple verticalement, à l'intérieur d'une cuve, sa base plongeant dans un auget contenant un solvant ou un mélange de solvants, qui monte par capillarité le long de la plaque. Les différents constituants du mélange à analyser vont migrer plus ou moins le long d'une droite verticale et engendrer des tâches qui seront ensuite révélées. La position des tâches permet de déterminer la nature de chacun des constituants.

Le mélange à soumettre à analyse peut se trouver sur un substrat. C'est, par exemple, le cas du sébum secrété par le revêtement cutané, pour lequel il est souhaitable en dermatologie, de connaître la nature et les proportions relatives des lipides qui le composent. Le prélèvement du mélange à analyser sur le substrat peut être effectué au moyen d'un solvant. Il peut être aussi plus commodément réalisé au moyen d'un support-plan tel qu'un petit carré de verre. Mais, dans ce dernier cas, on est quand même obligé de faire appel à un solvant pour faire passer par dilution, la prise d'essai prélevée sur le support-plan à l'intérieur dudit solvant. Le volume de solvant utilisé doit être important si l'on veut récupérer toute la prise d'essai, ce qui est indispensable lorsque l'on désire déterminer les proportions relatives des constituants du mélange. On obtient ainsi une solution, dont la concentration en soluté est extrêmement faible, et il est, par conséquent, nécessaire de la concentrer avant de la déposer sur la plaque de chromatographie. Toutes ces étapes de dilution et de concentration compliquent l'analyse chromatographique et s'avèrent coûteuses en temps et en personnel expérimenté.

Un autre inconvénient de l'analyse par voie chromatographique sur couche mince réside dans l'exiguïté des prises d'essai soumises à analyse, qui sont généralement comprises entre 1 et 5 microlitres et peuvent aller à l'extrême limite jusqu'à 20 microlitres. En effet, la séparation chromatographique des constituants d'un mélange réussit d'autant mieux que la quantité de mélange est plus faible à analyser; mais cette exiguïté des prises d'essai est une source de difficulté lorsqu'on veut pratiquer une analyse quantitative précise des constituants du mélange.

On a commercialisé récemment des plaques comportant comme zone de concentration, où sont déposées les prises d'essai, une couche de terre de diatomées. Ces plaques permettent le dépôt d'une quantité de prise d'essai plus importante pouvant aller jusqu'à environ 500 microlitres sans que cela nuise à la qualité de la séparation. Mais, néanmoins, de telles plaques de chromatographie nécessitent, comme les plaques de chromatographie classiques, une étape de dilution par un solvant de la prise d'essai prélevée sur un support plan suivie d'une étape de concentration de la solution obtenue.

Dans le brevet US n° 3 915 856, on a décrit un procédé de chromatographie préparative en couche mince qui consiste à fabriquer une plaque de chromatographie dans la bordure d'élution de laquelle on insert une bande constituée du produit à soumettre à la chromatographie. Un tel procédé, s'il est envisageable pour la chromatographie préparative qui met en oeuvre des couches relativement épaisses est difficilement envisageable pour la chromatographie analytique qui met en oeuvre des couches ayant une épaisseur inférieure à 300 microns. En outre, un tel procédé nécessite une préparation spéciale de la plaque de chromatographie avant se mise en oeuvre puisqu'il est nécessaire d'enlever sur la plaque une bande de silice et de la remplacer ensuite par une bande de produit à chromatographier insérée dans le couche de silice; cette façon d'opérer, si elle est envisageable en chromatographie préparative, est difficilement concevable en chromatographie analytique où l'on recherche tout particulièrement une réduction des temps d'opération. Enfin, ce procédé n'est pas utilisable lorsque le mélange soumis à analyse est prélevé en très faible quantité sur un support solide, comme c'est le ces par exemple pour les prélèvements de sébum effectués sur la peau "in vivo" par appui sur la peau d'une plaquette de verre dépoli; en effet, la quantité de matière ainsi prélevée est extrêmement faible et ne pourrait pas donner naissance à la bande de produit que l'on doit mettre en place sur la plaque de chromatographie dans le procédé du brevet US 3 915 856.

La présente invention a pour but de remédier à l'inconvénient précité et, à cet effet, elle se propose de décrire un procédé de prélèvement et d'analyse par chromatographie sur couche mince, dans lequel les étapes susmentionnées de dilution et de concentration sont supprimées.

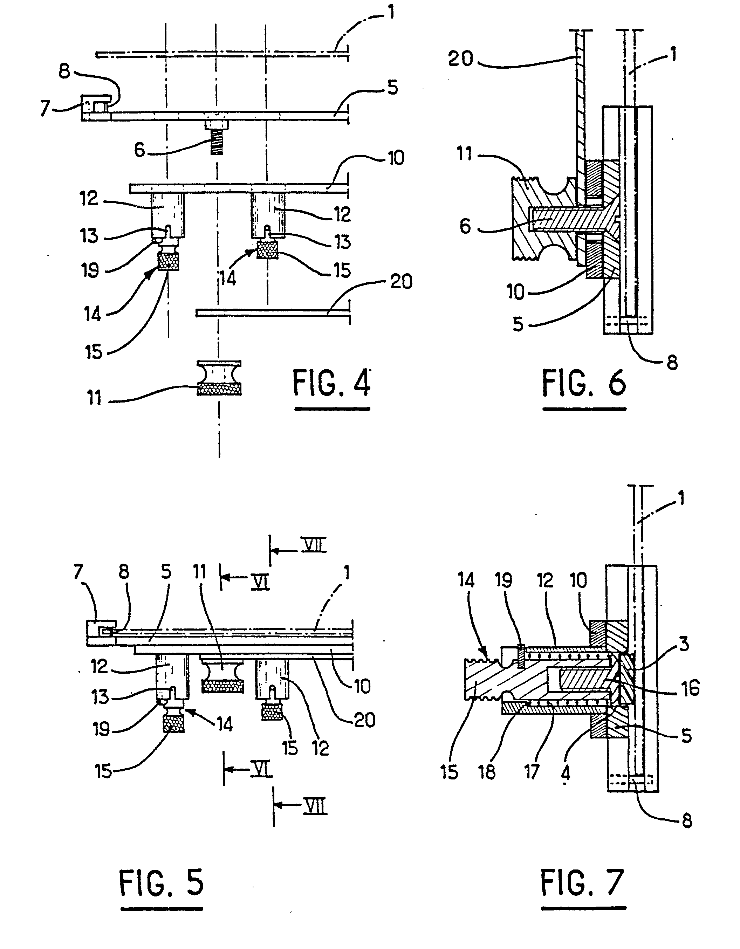

Aucun dispositif de l'état de la technique ne permet l'analyse chromatographique directe sur une plaque non préperée d'un prélèvement porté sur un support solide tel qu'une plaquette de verre dépoli; en particulier, les dispositifs décrits dans le brevet US 3 915 856 sont, d'une part, des dispositifs pour préparer une plaque de chromatographie et, d'autre part, sur la figure 6, un dispositif pour utiliser une telle plaque de chromatographie préparée; ce dispositif de le figure 6 ne met en oeuvre aucun support de prélèvement puisque le produit soumis à chromatogrephie a préaleblement été inséré sous forme de bande dans la couche de la plaque chromatographique.

En ce qui concerne les organes de prélèvement, on a déjà décrit dens le brevet US 3 266 554 un appareil destiné à déposer des échantillons sous forme liquide sur un milieu adsorbant. Un tel appereil n'est pas utilisable pour la manipulation d'un support solide tel que celui sur lequel on veut déposer le mélange à chromatographier dans le procédé selon l'invention.

La présente invention a donc pour objet un procédé de prélèvement et d'analyse par chromatographie sur plaque ou sur couche mince d'au moins un mélange de substances, ce procédé consistant à déposer une quantité appropriée du mélange à analyser sur une zone de bordure d'une plaque de chromatographie, à mettre en contact ladite bordure de la plaque avec un solvant ou un mélange de solvants de façon à provoquer la migration du mélange à analyser sur la plaque de chromatographie et la séparation des constituants dudit mélange, et à révéler ladite plaque pour l'analyse qualitative et/ou quantitative des constituants du mélange, caractérisé par le fait que l'on prélève le mélange à analyser au moyen d'une pièce-support solide non adsorbante, que l'on dépose ledit mélange sur la plaque de chromatographie en appuyant directement ladite pièce-support, par sa face où se trouve le mélange à analyser, contre une zone de bordure de ladite plaque de chromatographie, et que, jusqu'à ce que le mélange à analyser ait sensiblement entièrement migré hors de la pièce-support, on maintient ladite pièce-support appuyée contre la plaque, la zone de bordure où s'effectue l'appui de la pièce-support contre ladite plaque étant une zone de concentration formée d'une couche mince sans efficacité chromatographique disposée côte à côte avec la couche mince chromatographiquement efficace portée par la partie restante de la plaque.

Pour vérifier si le mélange à analyser a entièrement migré hors de la pièce-support, on peut notamment appliquer la pièce-support sur une nouvelle plaque de chromatographie et observer si d'autres substances sont susceptibles de migrer hors de la dite pièce-support.

La pièce-support utilisée est, de préférence, un corps rigide non adsorbant et notamment un support-plan de petite dimension tel qu'une lamelle ou une pastille. Le support-plan est avantageusement en verre, celle des deux faces qui reçoit le mélange à analyser étant dépolie.

Dans un mode préféré de mise en oeuvre, on effectue au moyen d'un support non adsorbant le prélèvement du mélange à analyser à partir du substrat solide, sur lequel il se trouve, dans des conditions reproductibles, et pour ce faire, le support précité est appliqué sur le substrat sous une pression et pendant une durée prédéterminées.

Selon une autre caractéristique avantageuse du procédé selon l'Invention, on maintient le support sur lequel a été appliqué le mélange à analyser contre la plaque de chromatographie par des moyens élastiques tels que par exemple un poussoir poussé par un ressort contre la plaque de chromatographie.

De préférence, on applique sur la même plaque de chromatographie non seulement le support sur lequel a été prélevé le mélange à analyser mais encore d'autres supports où sont déposés des substances où des mélanges-étalons, les mélanges-étalons étant choisis de façon à présenter des caractéristiques voisines de celles du mélange à analyser.

Une fois que le mélange à étudier et les substances ou les mélanges étalons ont été appliqués sur la plaque de chromatographie au moyen de supports non adsorbants, l'analyse chromatographique s'effectue de façon classique. Le procédé selon l'invention s'applique aussi bien à une chromatographie de partage qu'à une chromatographie d'adsorption. De façon connue, les solvants migrateurs, purs ou en mélange, sont convenablement choisis, de façon par exemple à faire varier la polarité ou le pH du milieu en fonction du mélange de substances à séparer.

Le procédé selon l'invention est tout particulièrement utilisable en dermatologie pour la détermination qualitative et quantitative du sébum secrété par la peau. Dans ce cas, le substrat sur lequel est effectué le prélèvement est constitué par de la peau "in-vivo". Mais il peut, bien entendu, être utilisé dans d'autres applications sans pour autant sortir du cadre de l'invention.

La presente invention a également pour objet un dispositif d'analyse destiné à la mise en oeuvre du procédé précédemment défini, ce dispositif comportant une plaque-support où est ménagé au moins un logement ouvert à ses deux extremités et en vis-à-vis de la bordure d'elution d'une plaque de chromatographie portée par ladite plaque-support, caractérisé par le fait que la pièce-support solide non adsorbante comportant en surface le mélange à analyser ou un produit étalon est mise en place dans au moins un logement et est poussée contre la plaque de chromatographie par des moyens assujettis à ladite plaque-support.

De préférence, notamment dans le cas où la plaque de chromatographie est destinée a être placée verticalement à l'intérieur de la cuve de chromatographie, le logement, où est disposé la pièce-support du mélange à analyser, est constitué par un alésage ménagé dans une plaque-support se terminant à ses deux extrémités par des équerres, où est positionnée et supportée la plaque de chromatographie.

Les moyens, qui poussent le support contre la plaque de chromatographie sont avantageusement des moyens élastiques assujettis de façon amovible à la plaque-support; ces moyens consistent, par exemple, en une contre-plaque assujettie par vissage à la plaque-support, ladite contreplaque étant traversée au droit du logement précité par un poussoir soumis à l'action d'au moins un ressort, ledit poussoir étant apte à prendre deux positions, une position où il fait saillie à l'intérieur du logement, et une position rétractée où il ne fait pas saillie à l'intérieur dudit logement.

La plaque-support comporte avantageusement une pluralité de logements régulièrement écartés et s'étendant selon son axe longitudinal; dans ce cas, la contre-plaque comporte un nombre égal de poussoirs, chaque poussoir étant guidé à l'intérieur d'un manchon faisant saillie sur la face longitudinale de la contre-plaque, qui ne vient pas en appui sur la plaque-support. De préférence, la plaque de chroma-tographie est suspendue à l'intérieur de la cuve au moyen d'un portoir amovible fixé par vissage sur la plaque-support et sa contre-plaque associée.

La présente invention a enfin pour objet un organe de prélèvement manuel destiné à la mise en oeuvre du procédé précédemment défini, ledit organe permettant de saisir la pièce-support non adsorbante destinée à recevoir le mélange à analyser, de l'appliquer sur un substrat et de libérer ladite pièce-support une fois que le prélèvement a été effectué, ledit organe comprenant, à l'intérieur d'un corps rigide de forme cylindrique allongée, ouvert à ses deux extrémités, un fourreau déplaçable axialement à l'intérieur dudit corps rigide à l'encontre d'au moins un ressort taré enfilé autour dudit fourreau, caractérisé par le fait qu'à l'intérieur du fourreau, est monté un élément de préhension du support destiné à recevoir le mélange à étudier, ledit élément étant déplaçable axialement à l'intérieur dudit fourreau à l'encontre d'un ressort de rappel.

De préférence, l'élément de préhension comporte une tige à l'une des extrémités de laquelle est assujetti un poussoir, ladite tige comportant, à son autre extrémité, une pince constituée de lamelles élastiques séparées par des fentes axiales, lesdites lamelles étant rapprochées radialemenet vers l'interieur dans le fourreau ou elles se trouvent, lorsque le poussoir n'est soumis à aucune action d'enfoncement dans le corps.

D'autres avantages et caractéristiques de formes d'exécution de l'invention apparaîtront à la lecture de la description suivante faite à titre d'exemple non limitatif en se référant au dessin annexé.

Sur ce dessin:
- la figure 1 est une vue en élévation de l'organe de prélèvement selon l'invention, le support où est appliqué le mélange à analyser étant logé à l'intérieur de la pince dudit organe;
- la figure 2 est une coupe axiale de l'organe de prélèvement de la figure 1, au repos;
- la figure 3 est une vue en perspective montrant une plaque de chromatographie et un dispositif selon l'invention conçu pour maintenir en appui contre ladite plaque, le support sur lequel est appliqué le mélange à analyser;
- la figure 4 est une vue partielle éclatée des différants éléments constituant le dispositif de la figure 3; .
- la figure 5 est une coupe partielle selon V-V de la figure 3;
- la figure 6 est une coupe selon VI-VI de la figure 5;
- la figure 7 est une coupe selon VII-VII selon la figure 5.

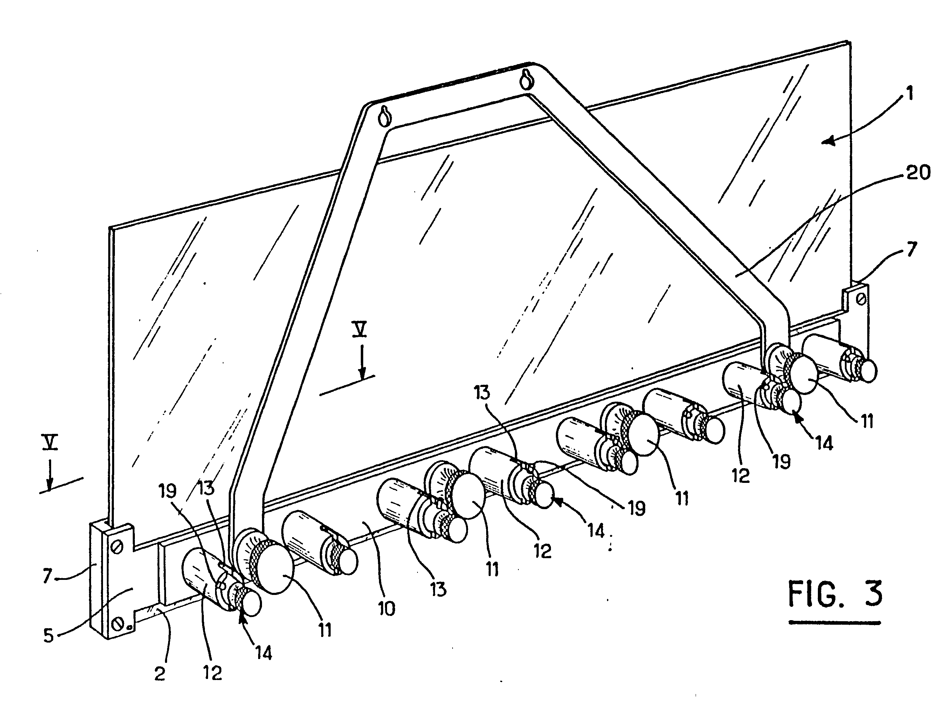

Sur la figure 3, on a désigné par 1 une plaque de chromatographie commercialisée sous la désignation de "Whatman LHPK". Elle est destinée à être suspendue verticalement à l'intérieur d'une cuve, sa base étant disposée de façon classique à l'intérieur d'un auget contenant un solvant ou un mélange de solvants. Elle est constituée d'une plaque de verre revêtue d'une mince couche de silice d'environ 250 microns d'épaisseur qui s'étend sur une hauteur d'environ 10 cm. A sa base, elle comporte, sur une hauteur d'environ 2 cm, une zone de concentration 2 constituée d'une mince couche de terre de diatomées. Sur la zone de concentration 2 sont habituellement déposées des gouttelettes du mélange à analyser et des étalons appropriés. La couche de diatomées 2 permet, on le sait, le dépôt d'une plus grande quantité de mélange pouvant aller jusqu'à 500 microlitres en autorisant une bonne séparation alors que pour une plaque de chromatographie classique, la quantité des prises d'essai ne peut pas excéder 20 microlitres et est généralement comprise entre 1 et 5 microlitres.

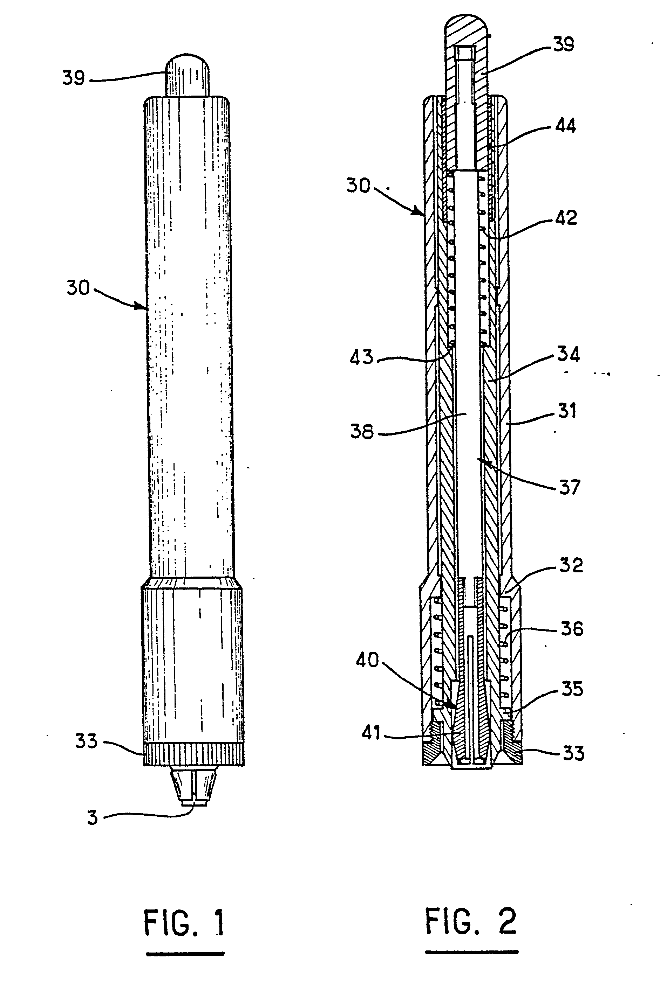

Dans cet exemple, l'échantillon à analyser et les étalons sont appliqués sur des supports-plans non adsorbants constitués par des pastilles de verre dépoli 3 (figures 1 et 3) d'environ 6 mm de diamètre.

L'échantillon à analyser et les étalons sont déposés sur la face dépolie des pastilles 3 et sont prélevés au moyen d'un organe qui sera décrit de façon détaillée ci-après en liaison avec les figures 1 et 2.

Les pastilles de verre 3 sont, après prélèvement, disposées à l'intérieur de logements cylindriques 4 pratiqués dans une plaque-support 5. Dans cet exemple, il est prévu huit logements 4 tous identiques, traversant de part en part, la plaque-support 5. Les logements 4 sont régulierement espacés et disposés selon l'axe longitudinal de la plaque-support 5.

La plaque-support 5 est réalisée en acier inoxydable. Elle est solidarisée avec quatre vis d'assemblage 6 à tête fraisée dont les tiges filetées font saillie sur la face antérieure de la plaque-support 5, c'est-à-dire sur la face qui est opposée à la plaque de chromatographie 1. La plaque-support 5 est pourvue à ses extrémités, du côté de sa face postérieure, de deux équerres 7 tournées l'une vers l'autre. Les deux équerres 7 sont rivetées à la plaque-support 5. La plaque de chromatographie 1 est montée à jeu entre les deux équerres 7 et la plaque-support 5; elle vient porter sur deux ergots de butée 8 supportés à leurs extrémités, d'une part, par la plaque-support 5 et, d'autre part, par l'aile parallèle de l'équerre correspondante 7.

Deux petits tétons (non représentés) faisant saillie sur la face postérieure de la plaque-support 5, au droit des deux équerres 7, mais tiennent écartée la plaque de chromatographie 1 par rapport à la plaque-support 5; cet écartement est approximativement de 1 mm et est inférieur à l'épaisseur d'une pastille de verre 3. Les logements 4 des pastilles de verre 3 sont disposés sensiblement selon l'axe médian longitudinal de la zone de concentration 2 de la plaque de chromatographie 1.

Une contre-plaque 10, également en acier inoxydable peut être serrée contre la face antérieure de la plaque-support 5 au moyen de quatre écrous moletés 11 coopérant avec les vis d'assemblage 6 de la plaque-support 5. La largeur de la contre-plaque 10 est sensiblement égale à celle de la plaque-support 5 mais sa longueur est légèrement inférieure. Au droit de chaque logement 4 de la plaque-support 5, la contre-plaque 10 comporte un alésage où est serti un manchon cylindrique 12. La contre-plaque 10 est donc solidaire de huit manchons 12 régulièrement espacés dont les axes sont perpendiculaires au plan de la plaque; les manchons 12 ne font saillie que sur la face antérieure de la contre-plaque 10 de sorte que cette dernière peut être appliquée à plat contre la plaque-support 5. Deux encoches diamétralement opposées 13 sont pratiquées sur le bord libre des manchons 12 qui est opposé à la contre-plaque 10.

Un poussoir 14 doté d'une tête moletée 15 est monté à coulissement à l'intérieur des manchons 12. Sur l'extrémité du poussoir 14, qui est opposée à la tête moletée 15, est pratiqué un trou, axial fileté à l'intérieur duquel est vissée une vis 16 à tête ronde. La tête de la vis 16, qui fait saillie radialement par rapport su corps du poussoir 14, constitue l'une des deux butées pour un ressort helicoïdal 17 enfilé autour du poussoir 15 à l'intérieur du manchon 12. L'autre butée du ressort hélicoïdal 17 est constitué par un épaulement 18 pratiqué sur la paroi intérieure du manchon 12. Le ressort 17 tend à déplacer le poussoir 15 en direction de la plaque de chromatographie 1, de façon que la tête ronde de la vis 16 fasse saillie à l'intérieur des logements 4 de la plaque 5.

Le poussoir 14 est solidaire d'un ergot d'arret 19 grâce auquel il peut prendre deux positions: une position rétractée où l'ergot 19 est appuyé contre le rebord périphérique du manchon 12 et une position de sortie où l'ergot d'arrêt 19 vient en butée contre le fond de l'une des deux encoches diamétralement opposées 13, le passage de l'une à l'autre des deux positions étant réalisé en faisant tourner le poussoir 14 à l'intérieur du manchon 12 d'au maximum un quart de tour.

L'ensemble formé par la plaque-support 5, la contreplaque 10 vissée sur le plaque-support 5 et la plaque de chromatographie 1 est suspendu à l'intérieur d'une cuve de chromatographie de type connu au moyen d'un portoir en U, 20 en acier inoxydable qui est assujetti par vissage au moyen de deux écrous moletés 11 sur des vis d'assemblage 6 de la plaque-support 5.

Sur les figures 1 et 2, on a représenté l'organe de prélèvement d'un mélange à analyser sur un substrat tel que de la peau "in-vivo" par exemple, au moyen d'une pastille de verre dépoli 3. Un tel organe a été désigné par 30 dans son ensemble. 11 a pour fonction:
- de saisir une pastille du verre dépoli 3 sur laquelle on désire prélever une prise d'essai;
- d'appliquer la pastille de verre dépoli 3 sur le substrat sous une pression prédéterminée;
- et, une fois le prélèvement effectué, de libérer la pastille de verre dépoli 3 au droit d'un logement 4 de la plaque-support 5 pour l'introduire à l'intérieur.

L'organe de prélèvement 30 est pourvu d'un corps rigide 31, en forme de cylindre allongé, ouvert à ses deux extrémités; le corps 31 comporte deux sections de diamètres intérieurs différents se raccordant par un épaulement 32. A l'extrémité libre de la section du plus grand diamètre, qui est tournée du côté du substrat, est vissé un embout 33.

Un fourreau 34, également ouvert à ses deux extrémités, est monté à coulissement à l'intérieur du corps 31 de l'organe de prélèvement. Il est pourvu d'une collerette périphérique 35 poussée contre l'embout 33 au moyen d'un ressort spiral taré 36 enfilé à l'intérieur du corps 31 autour du fourreau 34 et s'appuyant contre l'épaulement intérieur 32. Une rondelle en téflon 44 est sertie à l'intérieur du fourreau 34, au voisinage de son extrémité opposée à l'embout 33.

A l'intérieur du fourreau 34, est monté à coulissement un élément de préhension 37: il comprend une tige 38 à l'une des extrémités de laquelle est vissé un poussoir 39 qui émerge normalement à l'extrémité du corps 31 opposée à l'embout 33. Sur l'autre extrémité de la tige 38 est vissée une pince 40 comportant troie lamelles élastiques 41 de section courbe, séparées par des fentes axiales.

Le poussoir 39 sert de butée à un ressort de rappel 42 enfilé autour de la tige 35 et s'appuyant sur un épaulement 43 ménagé sur la paroi intérieure du fourreau 34.

Le fonctionnement de l'organe de prélèvement 30 est comparable à celui d'un stylo-mine de type classique équipé d'un ressort taré supplémentaire: pour saisir une pastille de verre dépoli 3, l'opérateur, en tenant à pleine main le corps 31 de l'organe de prélèvement appuie, par exemple avec le pouce, sur le poussoir 39. Il provoque ainsi, à l'intérieur du fourreau 34, le déplacement de la tige 38 et de sa pince 40 attenante, ce mouvement étant effectué à l'encontre du ressort de rappel 42; la pince 40 peut alors faire saillie en dehors de l'embout 33 et ses trois lamelles 41 qui étaient contraintes radialement vers l'intérieur par le fourreau 34, peuvent s'écarter l'une de l'autre; l'opérateur place la pastille de verre dépoli 3 à l'intérieur du passage circulaire défini par les trois lamelles 41 écartées de la pince émergeante 40. Dès que l'opérateur relâche son mouvement, la pince 40 est à nouveau enfoncée à l'intérieur du fourreau 34; les trois lamelles élastiques 41 sont donc rapprochées radialement vers l'intérieur et viennent, par suite, serrer la pastille de verre dépoli 3.

Pour appliquer sur le substrat, la pastille de verre dépoli 3 maintenue par la pince 40 de l'organe de prélèvement, l'opérateur, en tenant ledit organe par son corps 31, le pousse contre le substrat de façon à déplacer axialement, à l'encontre du ressort taré 36, le corps 31 par rapport au fourreau 34 et à amener ainsi l'embout 41 sensiblement au contact du substrat. Le tarage du ressort 36 est choisi de façon à appliquer sur le substrat une pression sensiblement constante, que le ressort 36 soit peu ou fortement comprimé. Pendant une période de temps constante, prédéterminée, l'opérateur maintient la pastille de verre dépoli 3 appliquée contre le substrat.

Après prélèvement, la mise en appui de la pastille de verre dépoli 3 sur une plaque de chromatographie 1, au moyen des dispositiis 3 à 7 est effectuée comme suit: la contre-plaque 10 n'étant pas assemblée à la plaque-support 5, on introduit entre les deux équerres 7 de cette dernière la plaque de chromatographie 1, puis cet ensemble est sensiblement couché à plat, par exemple sur une paillasse, la plaque-support 5 étant superposée à la plaque de chromatographie 1. L'organe de prélèvement 30 est amené au droit de l'un des logements 4 de la plaque-support 5 et l'opérateur, en agissant sur le poussoir 39, libère la pastille de verre dépoli 3 et la fait tomber à l'intérieur du logement choisi 4 contre la plaque de chromatographie 1. En répétant l'opération choisie ci-dessus, l'opérateur peut garnir chacun des logements 4 avec des pastilles de verre dépoli 3 sur lesquelles ont été déposés soit d'autres échantillons à étudier, soit des étalons convenablement choisis.

Cette opération étant achevée, on applique sur la plaque-support 5, la contre-plaque 10 dont tous les poussoirs 14 sont en position rétractée puis le portoir 20 en enfilant ces deux éléments autour des vis d'assemblage 6 de la plaque-support 5 et on assemble le tout au moyen des boulons moletés 11; enfin, on tourne les poussoirs 14 pour les faire passer dans leur position de sortie.

Le dispositif des figures 3 à 7 et l'organe de prélèvement 30 des figures 1 et 2 sont particulièrement utilisables en dermatologie pour l'analyse du sébum. Dans ce cas, une pastille de verre dépoli 3 est appliquée sur la peau (front ou scalp) au moyen de l'organe de prélèvement 30 pendant un temps d'environ 15 secondes; ce temps est choisi de façon à prélever une prise d'essai qui ne soit ni trop faible ni trop importante. Sans aucun traitement ultérieur, la pastille de verre dépoli 3 est positionnée contre la zone de concentration 2 de la plaque de chromatographie 1, comme ci-dessus décrit, au moyen du dispositif des figures 3 à 7. On prend soin de disposer de part et d'autre de la prise d'essai, des mélanges étalons qui ont été également déposés sur des pastilles de verre dépoli 3. Ces mélanges étalons sont convenablement choisis de façon à présenter des caractéristiques voisines du mélange de lipides à étudier. L'ensemble représenté sur la figure 3 est alors suspendu à l'intérieur d'une cuve de chromatographie de type classique, la base de la zone de concentration 2 étant plongée dans un solvant, le niveau de solvant étant, bien entendu, en dessous des pastilles de verre dépoli 3.

L'élution est opérée de façon classique: le solvant de migration passe sur la terre de diatomées puis sur la silice de la plaque 1. Lorsque la pastille de verre dépoli 3, maintenue par le dispositii décrit ci-dessus, se trouve en contact avec la silice, le solvant élue le mélange de lipides se trouvant sur ledit verre dépoli: le solvant de migration se comporte aussi comme un solvant d'élution. La séparation des différents lipides du mélange est effectuée par les trois bains successifs suivants: hexane, hexane-éther, (90/10); hexane-éther-acide acétique (70/30/1). Il y a lieu de noter que l'élution de la plaque de chromatographie 1 est achevée des le deuxième bain. A la fin de celui-ci, on peut séparer la plaque de chromatographie 1 de la plaque-support 5 et de sa contre-plaque attenante 10. La plaque de chromatographie 1 est séchée puis immergée dans une solution d'acide sulfurique à 3%. La plaque de chromatographie est ensuite laissée à l'étude pendant un temps d'environ 30 minutes à une température d'environ 170°C.

Au moins cinq taches distinctes apparaissent alors, très séparées. Elles correspondent aux constituants suivants (classés par ordre de $R_f$ croissant):
- cholestérol
- acides gras libres
- triglycérides
- cires monoesters
- squalène

D'autres taches, fonction du type de peau, peuvent apparaitre:
- les diglycérides (avant le cholestérol)
- les cires diesters (entre les triglycérides et les cires monoesters).

L'analyse quantitative de chacun des constituants séparés est effectuée par détermination de l'intensité de la couleur de la tâche (photo-densitométrie); grâce à la présence des mélanges étalons déposés de part et d'autre de la prise d'essai, le photo-densitomètre donne, après étalonnage, une réponse linéaire. Il est donc possible de connaître les quantités exactes de chaque constituant présent dans chaque prise d'essai. La précision est de l'ordre de 0,5 %.

Cette méthode s'avère particulièrement sensible puisqu'elle permet de détecter des quantités de constituant aussi faibles que 0,2 μ g (par exemple, cholestérol: 0,2 μ g, cires: 1 μ g; squalène: 0,5 μ g).

La plus grande sensibilité analytique que l'on obtient avec la méthode ci-dessus décrite, en comparaison de la méthode classique, résulte pour l'essentiel du fait que les prises d'essai de la méthode classique ne pouvaient pas dépasser 20 microlitres alors que dans la présente méthode, elles peuvent aller jusqu'à 500 microlitres ce qui, bien évidamment, améliore l'analyse quantitative.

Un autre intérêt majeur de la présente méthode est qu'elle est particulièrement simple et rapide puisque les phases de dissolution des prises d'essai puis de concentration de la solution obtenue avant son application sur la plaque de chromatographie sont supprimées. Dans la présente invention, on passe directement du substrat sur lequel se trouve le mélange à étudier en utilisant un véhicule solide non adsorbant quelconque pour transporter le prélèvement du substrat à la plaque de chromatographie, sans aucun traitement intermédiaire, le véhicule étant fixé sur la plaque pendant la chromatographie.

Du fait de la suppression des opérations délicates de dilution de la prise d'essai et de concentration de la solution obtenue, la méthode selon l'invention peut être mise en oeuvre par des personnes même non expertes dans les techniques de laboratoire et être utilisée sans difficulté pour des contrôles de routine.

Il est bien entendu que le mode de réalisation ci-dessus décrit n'est aucunement limitatif et pourra donner lieu à toutes modifications désirables, sans sortir pour cela du cadre de l'invention.

**Revendications:**

1 - Procédé de prélèvement et d'analyse par chromatographie sur plaque ou sur couche mince d'au moins un mélange de substances, ce procédé consistant à déposer une quantité appropriée du mélange à analyser sur une zone de bordure d'une plaque de chromatographie (1), à mettre en contact ladite bordure de la plaque (1) avec un solvant ou un mélange de solvants de façon à provoquer la migration du mélange à analyser sur la plaque de chromatographie et la séparation des constituants dudit mélange, et à révéler ladite plaque (1) pour l'analyse qualitative et/ou quantitative des constituants du mélange, caractérisé par le fait que l'on prélève le mélange à analyser au moyen d'une pièce-support solide (3) non adsorbante, que l'on dépose ledit mélange sur la plaque de chromatographie (1) en appuyant directement ladite pièce-support (3), par sa face où se trouve le mélange à analyser, contre une zone de bordure de ladite plaque de chromatographie (1), et que, jusqu'à ce que le mélange à analyser ait sensiblement entièrement migré hors de la pièce-support (3), on maintient ladite pièce support (3) appuyée contre la plaque (1), la zone de bordure où s'effectue l'appui de la pièce-support (3) contre ladite plaque (1) étant une zone de concentration formée d'une couche mince sans efficacité chromatographique disposée côte à côte avec la couche mince chromatographiquement efficace portée par la partie restante de la plaque (1).

2 - Procédé selon la revendication 1, caractérisé par le fait que l'on maintient la pièce-support (3) appuyée contre la plaque (1) grâce à des moyens élastiques (17).

3 - Procédé selon l'une des revendications 1 ou 2, caractérisé par le fait que la zone de concentration de la plaque (1) comporte une mince couche de terre de diatomées disposée côte à côte avec la mince couche de silice adsorbante portée par la partie restante de la plaque de chromatographie.

4 - Procédé selon l'une des revendications 1 à 3, caractérisé par le fait que la pièce-support non adsorbant utilisée est une pièce-support plane sensiblement rigide de petite dimension.

5 - Procédé selon l'une des revendications 1 à 4, dans lequel on effectue le prélèvement du mélange à analyser à partir d'un substrat solide sur lequel il se trouve, caractérisé par le fait que l'on applique la pièce-support solide non adsorbante sur le substrat sous une pression et pendant une durée prédéterminées.

6 - Procédé selon les revendications 4 et 5 prises simultanément, caractérisé par le fait que le mélange à analyser est du sébum prélevé sur de la peau "in vivo" et que la pièce-support plane est un verre dépoli.

7 - Dispositif d'analyse destiné à la mise en oeuvre du procédé selon l'une des revendications 1 à 6, ce dispositif comportant une plaque-support (5) ou est menage au moins un logement (4) ouvert à ses deux extrémités et en vis-a-vis de la bordure d'élution d'une plaque de chromatographie (1) portée par ladite plaque-support (5), caractérisé par le fait que la pièce-support solide (3) non adsorbante comporte en surface le mélange à analyser ou un produit étalon et est mise en place dans au moins un logement (4) et est poussée contre la plaque de chromatographie (1) par des moyens (17) assujettis à ladite plaque-support (5).

8 - Dispositif selon la revendication 7, caractérisé par le fait que les moyens qui poussent la pièce-support (3) contre la plaque de chromatographie (1) sont des moyens élastiques (17) assujettis de façon amovible à la plaquesupport (5) et portés par une contre-plaque (10) mécaniquement fixée sur ladite plaque-support (5).

9 - Dispositif selon l'une des revendications 7 ou 8, caractérisé par le fait que la plaque-support (5) se termine à ses deux extrémités par des équerres (7), où est positionnée et supportée la plaque de chromatographie (1).

10. Dispositif selon la revendication 8, caractérisé par le fait que la contre-plaque (10) est traversée au droit du logement (4) par un poussoir (15) soumis à l'action d'au moins un ressort (17), ledit poussoir (15) étant apte à prendre deux positions, une position où il fait saillie à l'intérieur du logement (4), et une position rétractée où il ne fait pas saillie à l'intérieur dudit logement (4).

11. Dispositif selon l'une des revendications 8 ou 10, caractérisé par le fait que la contre-plaque (10) comporte plusieurs poussoirs (15) en nombre égal au nombre de logements (4) de la plaque-support (5), chaque poussoir (15) étant guidé à l'intérieur d'un manchon (12) faisant saillie sur la face longitudinale de la contre-plaque (10), qui ne vient pas en appui sur la plaque-support (5).

12. Organe de prélèvement manuel pour la mise en oeuvre du procédé selon l'une des revendications 1 à 6, ledit organe permettant de saisir la pièce-support non adsorbante destinée à recevoir le mélange à analyser, de l'appliquer sur un substrat et de libérer ladite pièce-support une fois que le prélèvement a été effectué, ledit organe comprenant, à l'intérieur d'un corps rigide (31) de forme cylindrique allongée, ouvert à ses deux extrémités, un fourreau (34) déplaçable axialement à l'intérieur dudit corps rigide (31) à l'encontre d'au moins un ressort taré (36) enfilé autour dudit fourreau, caractérisé par le fait qu'à l'intérieur du fourreau (34), est monté un élément de préhension (37) du support destiné à recevoir le mélange à étudier, ledit élément étant déplaçable axialement à l'intérieur dudit fourreau (34) à l'encontre d'un ressort de rappel (42).

13. Organe de prélèvement selon la revendication 12, caractérisé par le fait que l'élément de préhension (37) comporte une tige à l'une des extrémités de laquelle est assujetti un poussoir (39), ladite tige comportant, à son autre extrémité, une pince (40) constituée de lamelles élastiques (41) séparées par des fentes axiales, lesdites lamelles étant rapprochées radialement vers l'intérieur dans le fourreau (34) où elles se trouvent, lorsque le poussoir (39) n'est soumis à aucune action d'enfoncement dans le corps (31).

**Patentansprüche**

1. Verfahren zur Entnahme und Analyse mittels Platten-oder Dünnschichtchromatographie von mindestens einer Substanzmischung,
wobei man eine ausreichende Menge der zu analysierenden Mischung in einer Randzone einer Chromatographieplatte (1) aufbringt,
diesen Rand der Platte (1) mit einem Lösungsmittel oder einem Lösungsmittelgemisch so in Kontakt bringt, daß die zu analysierende Mischung auf der Chromatographieplatte wandert und sich die Bestandteile der Mischung trennen und
diese Platte (1) zur qualitativen und/oder quantitativen Analyse der Mischungsbestandteile entwickelt,
dadurch gekennzeichnet,
daß man die zu analysierende Mischung mit Hilfe eines nicht-adsorbierenden festen Trägers (3) entnimmt,
daß man diese Mischung auf die Chromatographieplatte (1) aufbringt, indem man diesen Träger (3) mit der Seite, auf der sich die zu analysierende Mischung befindet, direkt gegen eine Randzone der Chromatographieplatte (1) drückt, und
daß man diesen Träger (3) solange gegen die Platte (1) gedrückt hält, bis die zu analysierende Mischung im wesentlichen vollständig von dem Träger (3) weggewandert ist, wobei die Randzone, wo der Träger (3) gegen die Platte (1) gedrückt wird, eine Konzentrationszone darstellt, die aus einer dünnen Schicht ohne chromatographische Eigenschaften gebildet ist, welche an die dünne Schicht mit chromatographischen Eigenschaften, die sich auf dem übrigen Teil der Platte (1) befindet, angrenzt.

2. Verfahren nach Anspruch 1, dadurch gekennzeichnet, daß man den Träger (3) mit Hilfe von elastischen Mitteln (17) gegen die Platte (1) gedrückt hält.

3. Verfahren nach einem der Ansprüche 1 oder 2, dadurch gekennzeichnet, daß die Konzentrationszone der Platte (1) eine dünne Schicht Diatomeenerde aufweist, die an die dünne adsorbierende Siliciumdioxidschicht angrenzt, welche sich auf dem übrigen Teil der Chromatographieplatte befindet.

4. Verfahren nach einem der Ansprüche 1 bis 3, dadurch gekennzeichnet, daß der eingesetzte nicht-adsorbierende Träger ein im wesentlichen steifer, ebener Träger von geringer Abmessung ist.

5. Verfahren nach einem der Ansprüche 1 bis 4, wobei man die Entnahme der zu analysierenden Mischung mit Hilfe eines festen Substrats, auf dem sich die Mischung befindet, durchführt, dadurch gekennzeichnet, daß man den festen, nicht-adsorbierenden Träger eine bestimmte Zeit unter Anwendung eines bestimmten Druckes auf das Substrat drückt.

6. Verfahren nach den Ansprüchen 4 und 5 gemeinsam, dadurch gekennzeichnet, daß die zu analysierende Mischung aus Sebum besteht, das von der Haut "in vivo" entnommen worden ist, und daß der ebene Träger ein geschliffenes Glas ist.

7. Analysevorrichtung zur Durchführung des Verfahrens nach einem der Ansprüche 1 bis 6, die eine Trägerplatte (5) aufweist, in der eine Ausnehmung (4) angeordnet ist, die an ihren beiden Enden offen ist und sich gegenüber der Elutionsrandzone einer von der Trägerplatte (5) getragenen Chromatographieplatte (1) befindet, dadurch gekennzeichnet, daß der nicht-adsorbierende, feste Träger (3) auf der Oberfläche die zu analysierende Mischung oder eine Vergleichsprobe aufweist und durch an der Trägerplatte (5) festgeklemmten Mittel (17) gegen die Chromatographieplatte (1) gedrückt wird.

8. Vorrichtung nach Anspruch 7, dadurch gekennzeichnet, daß die Mittel, die den Träger (3) gegen die Chromatographieplatte (1) drücken, elastische Mittel (17) sind, die abnehmbar an der Trägerplatte (5) festgeklemmt sind und die von einer mechanisch an der Trägerplatte (5) fixierten Gegenplatte (10) getragen werden.

9. Vorrichtung nach einem der Ansprüche 7 oder 8, dadurch gekennzeichnet, daß die Trägerplatte (5) an ihren beiden Enden in Form von Winkelstücken (7) endet, wo die Chromatographieplatte (1) positioniert und getragen wird.

10. Vorrichtung nach Anspruch 8, dadurch gekennzeichnet, daß die Gegenplatte (10) in der Ausnehmung (4) von einer Andrückvorrichtung (15) durchquert wird, auf die mindestens eine Feder (17) einwirkt, wobei die Andrückvorrichtung (15) zwei Stellungen einnehmen kann, nämlich eine Stellung, bei der sie ins Innere der Ausnehmung (4) ragt, und eine zurückgezogene Stellung, bei der sie nicht ins Innere dieser Ausnehmung (4) ragt.

11. Vorrichtung nach einem der Ansprüche 8 oder 10, dadurch gekennzeichnet, daß die Gegenplatte (10) mehrere Andrückvorrichtungen aufweist, wobei deren Anzahl der Anzahl der Ausnehmungen (4) der Trägerplatte (5) entspricht, und wobei jede Andrückvorrichtung (15) im Inneren einer Hülse (12) geführt ist, wobei letztere aus der Seitenfläche der Gegenplatte (10) hervorragt, die nicht gegen die Trägerplatte (5) gedrückt wird.

12. Vorrichtung zur manuellen Entnahme zur Durchführung des Verfahrens nach einem der Ansprüche 1 bis 6, die es ermöglicht, einen nicht-adsorbierenden, zur Aufnahme der zu analysierenden Mischung bestimmten Träger zu ergreifen, um ihn auf ein Substrat aufzubringen und diesen Träger, nachdem die Entnahme durchgeführt worden ist, freizugeben, wobei die Vorrichtung im Inneren eines steifen Körpers (31) mit länglicher, zylindrischer Form, der an seinen beiden Enden offen ist, eine Hülse (34) aufweist, die im Inneren dieses steifen Körpers (31) gegen mindestens eine geeichte Feder (36), die um diese Hülse gewickelt ist, axial verschoben werden kann, dadurch gekennzeichnet, daß im Inneren der Hülse (34) ein Element (37) zum Ergreifen des zur Aufnahme der zu untersuchenden Mischung bestimmten Trägers befestigt ist, wobei dieses Element im Inneren dieser Hülse (34) gegen eine Rückholfeder (42) axial verschiebbar ist.

13. Entnahmevorrichtung nach Anspruch 12, dadurch gekennzeichnet, daß das Element (37) zum Ergreifen einen Stab aufweist, an dessen einem Ende ein Drücker (39) befestigt ist, wobei dieser Stab an seinem anderen Ende eine Quetschvorrichtung (40) aufweist, die aus elastischen, durch axiale Spalte getrennte Lamellen besteht, wobei diese Lamellen radial ins Innere der Hülse (34) bewegt werden, wo sie sich befinden, wenn der Drücker (39) nicht in den Körper (31) eingedrückt wird.

## Claims

1. A method for the taking of samples and analysis by chromatography of at least one mixture of substances on a plate or thin layer, this method consisting in delysed on a border zone of a chromatographic plate (1), in placing the said border of plate (1) in contact with a solvent or a mixture of solvents so as to produce the migration of the mixture to be analysed on the chromatographic plate and the separation of the constituents of the said mixture, and in developing the said plate (1) for the qualitative and/or quantitative analysis of the constituents of the mixture, characterised in that the mixture to be analysed is taken up by means of a solid, non-adsorbent carrier part (3), that the said mixture is deposited on the chromatographic plate (1) by pressing the said carrier part (3) by its face where the mixture to be analysed is located, against a border zone of the said chromatographic plate (1) and that, until the mixture to be analysed has moved substantially completely from carrier part (3), the said carrier part (3) is kept to bear against plate (1), the border zone whereon the bearing contact of the carrier part (3) against the said plate (1) is effected being a concentration zone formed by a thin layer not being chromatographically effective, disposed side by side with the chromatographically effective thin layer carried by the remaining portion of plate (1).

2. A method according to Claim 1, characterised in that the carrier past (3) is kept to bear against plate (1) by means of elastic means (17).

3. A method according to one of Claims 1 or 2, characterised in that the concentration zone of plate (1) comprises a thin layer of diatomaceous earth disposed side by side with the thin layer of adsorbent silica carried by the remaining part of the chromatographic plate.

4. A method according to one of Claims 1 to 3, characterised in that the non-adsorbent carrier part used is a substantially rigid flat carrier part of small size.

5. A method according to one of Claims 1 to 4, wherein a sample is taken up of the mixture to be analysed from a solid substrate whereon it is situated, characterised in that the solid non-adsorbent carrier part is applied to the substrate under a predetermined pressure and during a predetermined period.

6. A method according to Claims 4 and 5 taken simultaneously, characterised in that the mixture to be analysed is sebum taken from skin "in vivo" and that the flat carrier part is ground glass.

7. A device for analysis intended to implement the method according to Claims 1 to 6, this device comprising a support plate (5) wherein there is arranged at least one housing (4) open at its two ends and opposite the elution edge of a chromatographic plate (1) carried by the said support plate (5), characterised in that the solid, non-adsorbent carrier part (3) comprises the mixture to be analysed or a standard product on its surface and is placed into at least one housing (4) and is pushed against the chromatographic plate (1) by means (17) fastened to the said support plate (5).

8. A device according to Claim 7, characterised in that the means pushing the carrier part (3) against the chromatographic plate (1) are elastic means (17) detachably fastened to the support plate (5) and carried by a back plate (10) which is mechanically fixed to the said support plate (5).

9. A device according to one of Claims 7 or 8, characterised in that the support plate (5) terminates at its two ends in corner brackets (7) wherein the chromatographic plate (1) is positioned and supported.

10. A device according to Claim 8, characterised in that the back plate (10) is traversed opposite housing (4) by a push button (15) subjected to the action of at least one spring (17), the said push button (15) being capable of taking up two positions one position wherein it projects inside housing (4) and a retracted position wherein it does not project inside the said housing (4).

11. A device according to one of Claims 8 or 10, characterised in that the back plate (10) comprises several push buttons (15) equal in number to the number of housings (4) of the support plate (5), each push button (15) being guided within a sleeve (12) projecting on the longitudinal side of the back plate (10) which does not come to bear on the support plate (5).

12. A device for manual sample taking for implementing the method according to one of Claims 1 to 6, the said device allowing the non-adsorbent carrier part to be gripped which is intended to receive the mixture to be analysed, to apply it to a substrate and to release the said carrier part after the sample has been taken up, the said device comprising, within a rigid body (31) of an elongated cylindrical shape, open at its two ends, a sleeve (34) axially displaceable within the said rigid body (31) against at least one calibrated spring (36) inserted around the said sleeve, characterised in that inside sleeve (34) there is fitted an element (37) for gripping the carrier intended to receive the mixture to be studied, the said element being axially displaceable within the said sleeve (34) against a restoring spring (42).

13. A device for sample taking according to Claim 12, characterised in that the gripping element (37) comprises a stem at one of the ends whereof, there is fastened a push button (39), the said stem comprising at its other end, a collet (40) constituted by elastic blades (41) separated by axial slots, the said blades being radially drawn towards the inside of sleeve (34) wherein they are located, when push button (39) is not subjected to any plunging action into body (31).

FIG. 1

FIG. 2

FIG. 3

FIG. 4

FIG. 6

FIG. 5

FIG. 7